# EUROPÄISCHE PATENTANMELDUNG

(11) **EP 1 723 997 A1**
(43) Veröffentlichungstag der Anmeldung: **22.11.2006**
(21) Anmeldenummer: 06113365.8
(22) Anmeldetag: 02.05.2006
(51) Int. Cl.: B01D 29/21, B01D 46/52

(54) **Filterelement**

(30) Priorität: 19.05.2005 DE 202005008092 U
(71) Anmelder: MANN+HUMMEL GmbH, 71638 Ludwigsburg (DE)
(72) Erfinder: Münkel, Karlheinz, 75038, Oberderdingen-Flehingen (DE); Bauder, Ralf, 68775, Ketsch (DE); Dworatzek, Klemens, 68535, Edingen (DE); Wagner, Udo, 84163, Marklkofen (DE)

(57) **Zusammenfassung**

Die Erfindung beschreibt einen Filter, insbesondere Luftfilter, vorzugsweise für die Reinigung von Verbrennungsluft für Brennkraftmaschinen, bestehend aus einem im wesentlichen hohlzylindrischen Filtereinsatz, insbesondere aus einem zickzackförmig gefalteten Filtermedium, wobei an den Stirnseiten Endscheiben angeordnet sind, wobei im Bereich einer Endscheibe mehrere am Umfang verteilte radial über die projizierte Stirnfläche hinausragende Abstandskonturen angeordnet sind, derart, dass diese Abstandskonturen im eingebauten Zustand des Filtereinsatzes an einer Gehäuseinnenwand eines dazugehörigen Filtergehäuses anliegen.

## Beschreibung

### Stand der Technik

Die Erfindung betrifft einen Filter, insbesondere Luftfilter, vorzugsweise für die Reinigung von Verbrennungsluft für Brennkraftmaschinen nach dem Oberbegriff des Patentanspruches 1. Die DE 44 16 577 AI beschreibt einen Filtereinsatz für einen Filter zur Filterung von flüssigen oder gasförmigen Medien. Dieser weist einen im Wesentlichen hohlzylindrischen Filterkörper auf, welcher von dem zu filternden Medium radial durchströmbar ist und der an den jeweiligen Stirnseiten zwei Endscheiben aufweist. Eine der Endscheibe ist dabei mit einer zentralen Durchbrechung versehen und ist dichtend auf einem Medienzuleitungsstutzen oder -ableitungsstutzen axial aufsteckbar, wobei die Abdichtung radial erfolgt. Die gegenüberliegende Endscheibe ist geschlossen, und die Endscheiben sind aus einem thermisch verwertbaren Kunststoff gefertigt. Des Weiteren weist die geschlossene Endscheibe eine Rastvertiefung auf, die zur Aufnahme von Gegenrastelementen eines Schraubdeckels eines zugehörigen Filtergehäuses oder eines Abzugswerkzeuges dient. Diese Rastvertiefung ist notwendig, um bei auftretenden Vibrationen im Betrieb der Brennkraftmaschine ein Schwingen des der Ab- oder der Zuleitung gegenüberliegenden Endes zu vermeiden. Sollte es nämlich zu Radialschwingungen des freien Endes des Filterelementes im Gehäuse kommen, so führt dieses entweder zu Undichtigkeiten im Bereich der gegenüberliegenden Radialdichtung oder zu einem Durchscheuern des freien Filterelementendes an der Gehäusewandung, wodurch im Verlaufe des Durchscheuerns auch das Filtermedium durchgescheuert werden kann, was zu Undichtigkeiten zwischen Roh- und Reinseite führt. Weitere im Stand der Technik bekannte Lösungen sind axiale Abstützungen über die Endscheibe am Deckel oder durch radiale Abstützung an der Medienbalginnenseite. Der Nachteil der ersten Variante ist der hohe Preis sowie die Belastung des Deckels, und der Nachteil der zweiten Variante ist, dass dieses ein innen offenes Element voraussetzt.

Aufgabe der Erfindung ist es daher, ein Filterelement anzubieten, welches einfach und kostengünstig aufgebaut ist und ein Schwingen des Filterelementes bei Vibrationen verhindert.

Diese Aufgabe wird durch die Merkmale des Patentanspruches 1 gelöst.

### Vorteile der Erfindung

Die Erfindung betrifft einen Filter für flüssige oder gasförmige Medien, insbesondere einen Luftfilter, vorzugsweise für die Reinigung von Verbrennungsluft von Brennkraftmaschinen. Der Filter besteht aus einem im Wesentlichen hohlzylindrischen Filtereinsatz, insbesondere aus einem zickzackförmig gefalteten Filtermedium, wobei das Filtermedium bevorzugt aus Filterpapier besteht. Es besteht jedoch auch die Möglichkeit, hier ein synthetisches Medium oder einen Vlieswickel zu verwenden. An den Stirnseiten des hohlzylindrischen Filterelementes sind Endscheiben angeordnet, wobei im Bereich einer Endscheibe mehrere über den Umfang verteilte, radial über die projizierte Stirnfläche hinausragende Abstandskonturen angeordnet sind. Diese Abstandskonturen können beispielsweise die Form von Nocken, Stiften oder Kreissegmenten aufweisen. Im eingebauten Zustand des Filtereinsatzes liegen die Abstandskonturen an einer Gehäuseinnenwand des dazugehörigen Filtergehäuses an. Dadurch wird in vorteilhafter Weise ein Schwingen des freien Endes des Filters im Gehäuse verhindert, wobei jedoch keine besonderen technischen oder konstruktiven Maßnahmen am Gehäuse ergriffen werden müssen. Über die Tiefe der über die projizierte Fläche hinausgehenden Abstandskonturen kann weiterhin der Abstand zwischen Gehäuseinnenwand und Filtermedium festgelegt werden. Ein weiterer Preisvorteil ergibt sich dadurch, dass die Abstandskonturen nicht durchgehend vollumfänglich um das Filterelement angeordnet sind, sondern nur über den Umfang verteilt, wodurch sich eine weitere Materialkosteneinsparung ergibt.

Gemäß einer vorteilhaften Ausgestaltung der Erfindung ist an der Innenwandung und/oder der Außenwandung des Filtermediums ein Stützkörper angeordnet. Dieser dient zur Aufnahme von bei der Durchströmung des Filterkörpers auftretenden im Wesentlichen radial nach innen oder außen gerichteten Kräften. Er ist dabei vorzugsweise in Form eines hohlzylindrischen Gitters ausgebildet, da dieses ein gutes Verhältnis von Stützwirkung einerseits zum Material- und Flächenverbrauch andererseits aufweist. Der Stützkörper ist dabei vorzugsweise aus Kunststoff gefertigt.

Gemäß einer vorteilhaften Ausgestaltung der Erfindung ist die Endscheibe im Bereich der Abstandskonturen geschlossen ausgeführt, und die gegenüberliegende Endscheibe weist einen innenliegenden radialen Dichtsitz auf. Gerade in dieser Konfiguration ist es notwendig, das Ende des Filterelementes, welches die geschlossene Endscheibe aufweist, gegenüber dem Gehäuseinneren festzulegen und dadurch ein Schwingen und damit ein Durchscheuern des Filtermediums zu verhindern. Durch die Abstandskonturen im Bereich der geschlossenen Endscheibe wird das Filterelement im Gehäuse fixiert, wobei ein vordefinierter Abstand zwischen Filtergehäuse und Filtermedium eingestellt wird.

Es ist vorteilhaft, die Abstandskonturen direkt an der Endscheibe zu befestigen oder einstückig aus ihr auszubilden. Dabei können die Abstandskonturen entweder in Form von Nocken oder beispielsweise Segmenten an die Endscheibe angeklebt, angeschweißt, angespritzt, angeklipst oder sonst wie lösbar oder unlösbar befestigt werden, oder aber direkt im Urformverfahren zusammen mit der Endscheibe hergestellt werden. So kann die Endscheibe direkt im Spritzgießverfahren oder im Gießverfahren mitsamt der am Umfang verteilten Abstandskonturen hergestellt werden.

Gemäß einer vorteilhaften Ausgestaltung der Erfindung ist die Endscheibe mit den Abstandskonturen aus einem spritzgießfähigen Kunststoff hergestellt. Als Material sei beispielsweise Polyamid oder Polypropylen genannt. Dabei kann die Endscheibe mit den Abstandskonturen die eigentlich funktionale Endscheibe darstellen, d. h. den Abschluss und die Abdichtung des Filtermediums übernehmen, oder zusätzlich zur funktionalen Endscheibe auf diese lösbar oder unlösbar aufgebracht sein.

Alternativ hierzu kann die Endscheibe mit den Abstandskonturen aus einem thermoplastischen Elastomer oder Nitrilkautschuk bestehen. Thermoplastische Elastomere sind Werkstoffe, bei denen elastomere Phasen als Weichkomponente in Kunststoffe als Hartkomponente eingebunden sind. Thermoplastische Elastomere bzw. abgekürzt TPE sind im Gegensatz zu Elastomeren nicht chemisch irreversibel, sondern physikalisch reversibel vernetzt. Die reversible Vernetzung wird durch ihren zweiphasigen Aufbau erzeugt. Bei geeigneter Molekulararchitektur bilden die Domänen der harten Sequenzen die physikalischen Vernetzungspunkte in einer kontinuierlichen Matrix der weichen Sequenzen, die dabei so ausgewählt werden, dass sie sich bei der Gebrauchstemperatur oberhalb ihrer Glastemperatur befinden (Einfriertemperatur). Die Glasübergangstemperatur (falls amorph) bzw. die Schmelztemperatur (falls teilkristallin) der harten Sequenzen muss dagegen oberhalb der Gebrauchstemperatur liegen, damit die Domänen der harten Sequenzen als Vernetzungspunkte wirken können. TPE verhalten sich bei der Gebrauchstemperatur wie Elastomere, oberhalb der charakteristischen Umwandlungstemperatur werden jedoch die harten Sequenzen mobil und die TPE können dann wie Thermoplaste verarbeitet werden. Der große Vorteil von TPE gegenüber vulkanisierten Elastomeren liegt in der wesentlich einfacheren Bearbeitung, es entfallen Mastikation (oxidativer Abbau), das Einmischen von Vulkanisationsbeschleunigern, in einigen Fällen auch das Compoundieren und natürlich auch die Vulkanisation.

Gemäß einer weiteren alternativen Ausgestaltung der Erfindung besteht die Endscheibe mit den Abstandskonturen aus einem thermoplastischen Polyurethanschaum. Auch dieser lässt sich einfach herstellen und einfach mit dem Filtermedium unlösbar verbinden. Durch die hohe Elastizität des Polyurethanschaumes können die Abstandskonturen auch mit einem großen Übermaß gegenüber dem Innendurchmesser des Gehäuses ausgeführt werden, da die Abstandskonturen stark kompressibel sind und dadurch zu einer sehr guten Fixierung im Gehäuse führen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: einen Filtereinsatz in einer isometrischen Ansicht und
- Figur 2: eine Detailvergrößerung eines Bereiches des Filtereinsatzes.

### Beschreibung der Ausführungsbeispiele

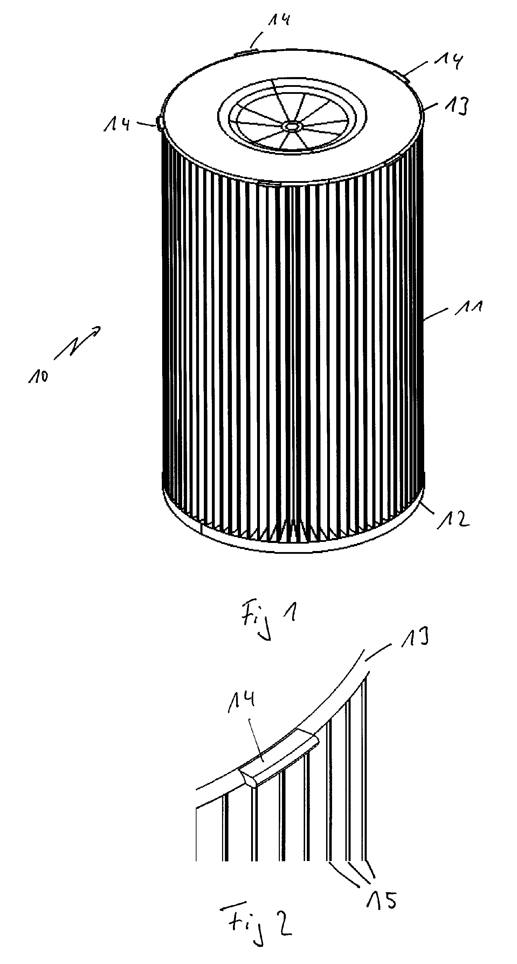

Figur 1 zeigt einen erfindungsgemäßen Filter 10 in einer isometrischen Ansicht. Der Filter 10 weist ein zickzackförmig gefaltetes Filtermedium 11 auf, welches an der einen Stirnseite durch eine erste Endscheibe 12 und an der gegenüberliegenden Stirnseite durch eine zweite Endscheibe 13 abgeschlossen ist. Die erste Endscheibe 12 weist einen hier nicht dargestellten Durchbruch im Inneren auf, mit einer innenliegenden Dichtkontur zur Aufnahme eines Anschlussstutzens im nicht dargestellten Gehäuse. Die zweite Endscheibe 13 ist geschlossen ausgeführt und weist über den Umfang verteilt mehrere Abstandskonturen 14 auf. Diese Abstandskonturen 14 erstrecken sich radial über die projizierte Stirnfläche des Filters 10 hinaus und sind direkt einstückig mit der zweiten Endscheibe 13 gebildet.
Figur 2 zeigt einen Detailausschnitt im Bereich der zweiten Endscheibe 13 des Filters 10. Den vorherigen Figuren entsprechende Bauteile sind mit den gleichen Bezugszeichen versehen. Es ist zu erkennen, dass die zweite Endscheibe 13 das Filtermedium 11 begrenzt und abdichtet. In Figur 2 sind die einzelnen Falten 15 des Filtermediums 11 zu erkennen. Des Weiteren ist zu sehen, dass die Abstandskontur 14, die Form von Kreissegmenten aufweist, welche über den Umfang der zweiten Endscheibe 13 verteilt sind.

## Patentansprüche

1. Luftfilter, vorzugsweise für die Reinigung von Verbrennungsluft für Brennkraftmaschinen, bestehend aus einem im wesentlichen hohlzylindrischen Filtereinsatz, insbesondere aus einem zickzackförmig gefaltetem Filtermedium, wobei an den Stirnseiten Endscheiben angeordnet sind, **dadurch gekennzeichnet, dass** im Bereich einer Endscheibe mehrere am Umfang verteilte radial über die projizierte Stirnfläche hinausragende Abstandskonturen angeordnet sind, derart, dass diese Abstandskonturen im eingebauten Zustand des Filtereinsatzes an einer Gehäuseinnenwand eines dazugehörigen Filtergehäuses anliegen.

2. Filter nach Anspruch 1, **dadurch gekennzeichnet, dass** an der Innenwandung und/oder der Außenwandung des Filtermediums ein Stützkörper angeordnet ist.

3. Filter nach einem der vorhergehenden Ansprüche, **dadurch gekennzeichnet, dass** die Endscheibe im Bereich der Abstandskonturen geschlossen ausgeführt ist und die gegenüberliegende Endscheibe einen innenliegenden radialen Dichtsitz aufweist.

4. Filter nach einem der vorhergehenden Ansprüche, **dadurch gekennzeichnet, dass** die Abstandskonturen an der einen Endscheibe befestigt sind oder einstückig aus ihr gebildet sind.

5. Filter nach Anspruch 4, **dadurch gekennzeichnet, dass** die Endscheibe mit den Abstandskonturen aus einem spritzgießfähigen Kunststoff besteht.

6. Filter nach Anspruch 4, **dadurch gekennzeichnet, dass** die Endscheibe mit den Abstandskonturen aus einem thermoplastischen Elastomer oder Nitrilkautschuk besteht.

7. Filter nach Anspruch 4, **dadurch gekennzeichnet, dass** die Endscheibe mit den Abstandskonturen aus einem thermoplastischen Polyurethan Schaum besteht.
